# FASCICULE DE BREVET EUROPEEN

(11) **EP 4 452 543 B1**
(45) Date de publication et mention de la délivrance du brevet: **14.01.2026**
(21) Numéro de dépôt: 22847607.3
(22) Date de dépôt: 21.12.2022
(51) Int. Cl.: B23K 23/00

(54) **MOULE POUR SOUDURE ALUMINOTHERMIQUE DE RAILS**
FORM ZUM ALUMINOTHERMISCHEN SCHWEISSEN VON SCHIENEN
MOULD FOR ALUMINOTHERMIC WELDING OF RAILS

(30) Priorité: 24.12.2021 FR 2114504
(43) Date de publication de la demande: 30.10.2024
(73) Titulaire: Pandrol, 59 590 Raismes (FR)
(72) Inventeur: MERESSE, Clément, 59530 POTELLE (FR); BORDERY, Pierre, 59690 VIEUX CONDE (FR); WINIAR, Lionel, 59790 RONCHIN (FR)
(74) Mandataire: Regimbeau
(86) Numéro de dépôt international: PCT/FR2022/052470
(87) Numéro de publication internationale: WO 2023/118753

(56) Documents cités:
- FR-A1- 2 966 172

## Description

### DOMAINE DE L'INVENTION

La présente invention concerne un moule pour soudure aluminothermique de rails.

### ETAT DE LA TECHNIQUE

Il est connu de souder deux rails successifs par soudure aluminothermique pour former une voie ferrée. Pour réaliser une telle soudure, on dispose un moule en matériau réfractaire comportant typiquement deux ou trois pièces autour des extrémités des rails à souder, lesdites extrémités étant séparées d'une distance dite « intercalaire », ou « gap » dans la terminologie anglo-saxonne. Les pièces du moule définissent avec lesdites extrémités des rails une empreinte de moulage. On pose ensuite un creuset contenant une charge aluminothermique sur ledit moule et on déclenche une réaction aluminothermique. Ladite réaction permet d'obtenir du métal en fusion qui s'écoule du creuset dans le moule et remplit l'empreinte de moulage. Au refroidissement, le métal se solidifie, ce qui permet de retirer ou détruire le moule et de réaliser des étapes de finition telles qu'un meulage de l'excédent de métal et un polissage de la zone soudée. Après la mise en oeuvre de la soudure aluminothermique, on réalise un contrôle de qualité par des méthodes non destructives, en particulier par un contrôle ultrason de la soudure.

Typiquement une soudure aluminothermique est réalisée par une coulée centrale (« central pouring » dans la terminologie anglo-saxonne), dans laquelle le métal fondu coule depuis le creuset sur un bouchon placé entre les deux parties du moule au-dessus des rails. Le métal est divisé par le bouchon en deux flux qui s'écoulent directement dans l'empreinte de moulage, du haut vers le bas, puis remonte dans des évents latéraux. Le jet de métal produit sur le fond du moule un unique impact qui est centré par rapport à l'intercalaire à la fois dans le sens longitudinal (sens de la longueur des rails) et dans le sens transversal (sens de la largeur des rails).

Une autre possibilité est une coulée en source (également appelée « coulée montante », ou « bottom-up pouring » dans la terminologie anglo-saxonne), dans laquelle le métal fondu coule depuis le creuset sur un bouchon placé entre les deux parties du moule au-dessus des rails. Le métal est alors réparti en deux flux de chaque côté du bouchon vers une pipe de remplissage latérale respective qui débouche au niveau du patin des rails. Contrairement à la coulée centrale, l'empreinte de moulage se remplit du bas vers le haut à partir des orifices de sortie des pipes de remplissage. Par ailleurs, les deux jets de métal produisent sur le fond du moule deux impacts qui sont centrés par rapport à l'intercalaire uniquement dans le sens longitudinal.

Le brevet FR2966172 décrit un moule de soudure aluminothermique permettant de mettre en œuvre une coulée en source.

Au vu de l'évolution des normes relatives à la qualité des soudures de rails, qui deviennent plus sévères, on observe généralement une quantité excessive de défauts dans les procédés de coulée centrale et de coulée en source. Ces défauts peuvent en particulier affecter la tenue en flexion de la zone soudée.

### EXPOSE DE L'INVENTION

Un but de la présente invention est de mettre à disposition un moule de soudure aluminothermique de rails qui permette d'optimiser la qualité métallurgique de la soudure et réduire ainsi le coût de maintenance de la voie ferrée.

A cette fin, l'invention propose un moule pour la soudure aluminothermique de deux rails, ledit moule comprenant au moins deux pièces latérales en matériau réfractaire, configurées pour être montées temporairement en regard l'une de l'autre de part et d'autre des extrémités des rails à souder de sorte à définir entre lesdites extrémités de rails une empreinte de moulage, chaque pièce latérale comprenant au moins une pipe de remplissage configurée pour guider du métal fondu de la partie supérieure du moule vers une zone de l'empreinte de moulage située au niveau du patin d'un rail, caractérisé en ce que chaque pipe de remplissage présente une section perpendiculaire à un axe d'écoulement du métal fondu dans la pipe respective, présentant un rétrécissement de sorte à réduire de manière progressive la largeur de ladite section dans une direction opposée à un plan longitudinal moyen commun aux deux rails à souder.

Une telle géométrie du moule permet d'augmenter la vitesse du métal fondu pendant la coulée et ainsi de réduire l'échange thermique du métal fondu avec le moule. Par conséquent, la température du métal pénétrant dans l'empreinte de moulage est élevée, ce qui permet de faire fondre les rails sur une largeur adaptée pour obtenir une bonne qualité métallurgique de la soudure. Une bonne qualité métallurgique se traduit par une réduction voire suppression de défauts à l'intérieur de la soudure et une amélioration de la tenue en flexion de la soudure.

De manière avantageuse, chaque pipe de remplissage présente deux parois essentiellement planes dans la région du rétrécissement. Lesdites parois forment un angle compris entre 40 et 90°.

De préférence, la section de chaque pipe de remplissage présente en outre une portion concave en forme d'arc de cercle, orientée vers le plan longitudinal moyen commun aux deux rails à souder.

Avantageusement, la section horizontale de chaque pipe de remplissage diminue de manière continue du haut vers le bas du moule. La section horizontale de chaque pipe de remplissage au niveau de l'ouverture inférieure est inférieure à 40% à 80% de la section horizontale de ladite pipe de remplissage au niveau de l'ouverture supérieure.

De manière avantageuse, chaque pipe de remplissage présente, à son extrémité inférieure, une portion courbée en direction du plan longitudinal moyen commun aux deux rails à souder. Ainsi, chaque pipe de remplissage est agencée de sorte à conduire le métal fondu sur une zone d'impact distincte au niveau du patin des rails.

Dans certains modes de réalisation, le moule comprend en outre une troisième pièce apte à venir en contact avec les faces inférieures des patins des rails à souder et définissant un fond de l'empreinte de moulage.

De préférence, chaque pipe de remplissage est inclinée en direction du plan moyen du haut vers le bas du moule.

### BREVE DESCRIPTION DES FIGURES

D'autres caractéristiques et avantages de l'invention ressortiront de la description détaillée qui va suivre, en référence aux dessins annexés, sur lesquels :
- La figure 1 est une vue en coupe verticale, perpendiculaire au sens de la longueur des rails, d'un moule pour soudure aluminothermique selon l'invention.
- La figure 2 est une vue en perspective d'une partie du moule de la figure 1.
- La figure 3A est une vue du dessus d'une pièce latérale d'un moule selon l'invention.
- La figure 3B est une vue du dessous d'une pièce latérale d'un moule selon l'invention.
- La figure 4A est une coupe horizontale d'une pipe de remplissage au niveau de la partie supérieure de la pièce du moule des figures 3A et 3B.
- La figure 4B est une coupe horizontale d'une pipe de remplissage au niveau de la partie inférieure de la pièce du moule des figures 3A et 3B.
- Les figures 5A à 5D illustrent plusieurs sections horizontales de pipes de différents modes de réalisation.
- La figure 6 illustre l'écoulement du métal fondu au niveau du patin du rail.
- La figure 7 est un graphe de la contrainte en fonction de la déformation d'une soudure réalisée avec un moule selon l'invention, issu d'un test de résistance à la flexion.

### DESCRIPTION DETAILLEE DE MODES DE REALISATION

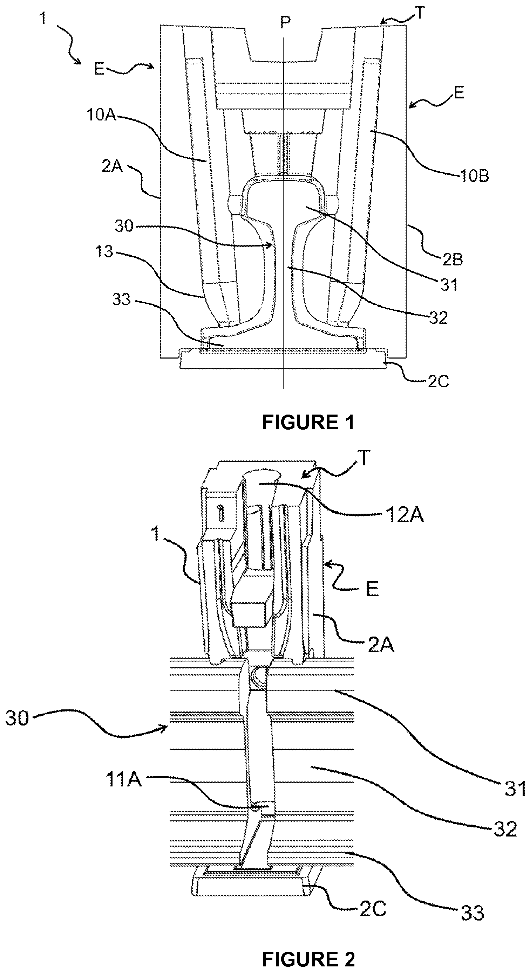

La figure 1 illustre de manière schématique un moule 1 selon l'invention.

Le moule 1 comprend au moins deux pièces latérales 2A, 2B en matériau réfractaire, par exemple en sable. Les pièces latérales 2A, 2B sont configurées pour être montées temporairement en regard l'une de l'autre autour des extrémités de deux rails 30 à souder.

Chaque rail 30 comporte trois parties longitudinales, à savoir un patin 33 formant la partie basse du rail 30 qui s'appuie sur une traverse, un champignon 31 formant le chemin de roulement, et une âme 32 d'orientation verticale qui relie le patin 33 au champignon 31. On définit un plan longitudinal moyen P commun aux deux rails, qui s'étend verticalement dans le sens de la longueur des rails.

De préférence, les pièces latérales 2A, 2B sont essentiellement symétriques par rapport au plan P.

Le moule 1 peut comporter en outre d'autres pièces en fonction de la conception et la forme des rails 30, sans pour autant sortir de la présente invention.

Dans certains modes de réalisation, comme représenté sur la figure 1, le moule 1 comprend également une pièce de fond 2C en matériau réfractaire destinée à être positionnée sous les patins 33 des rails 30.

Les pièces 2A, 2B, 2C du moule 1 et les extrémités des rails 30 à souder délimitent ensemble une empreinte de moulage pour une soudure aluminothermique pour joindre les deux rails 30. La figure 2 illustre l'agencement du moule 1 autour des extrémités des rails 30.

La face supérieure des pièces 2A et 2B est destinée à recevoir un creuset contenant une charge aluminothermique dont l'allumage produit le métal fondu destiné à remplir l'empreinte de moulage.

Chaque pièce latérale 2A, 2B du moule 1 comprend au moins une pipe de remplissage 10A, 10B configurée pour guider du métal fondu de la partie supérieure du moule 1 en liaison fluidique avec le creuset vers une zone de l'empreinte de moulage située au niveau de la surface supérieure du patin 33 des rails 30 à souder.

Chaque pipe 10A, 10B définit ainsi un axe d'écoulement du métal fondu, s'étendant entre une ouverture supérieure 12A, 12B située sur une face supérieure de la pièce 2A, 2B et une ouverture inférieure 11A, 11B débouchant dans l'empreinte de moulage au niveau de la surface supérieure des patins 33 de manière inclinée, en s'approchant du plan longitudinal P commun des rails 30 du haut vers le bas du moule 1.

Les pipes 10A, 10B présentent une portion supérieure 16 sensiblement rectiligne et une portion inférieure 13 présentant une courbure en direction du plan longitudinal moyen P, dont la fonction sera décrite plus bas. Typiquement, l'angle d'inclinaison de la portion supérieure des pipes dans leur portion supérieure 16 par rapport à un axe vertical est compris entre 0 et 15°, par exemple entre 2° et 8°.

On peut définir une section 110, 120 de chaque pipe 10A, 10B perpendiculaire à l'axe d'écoulement du métal fondu.

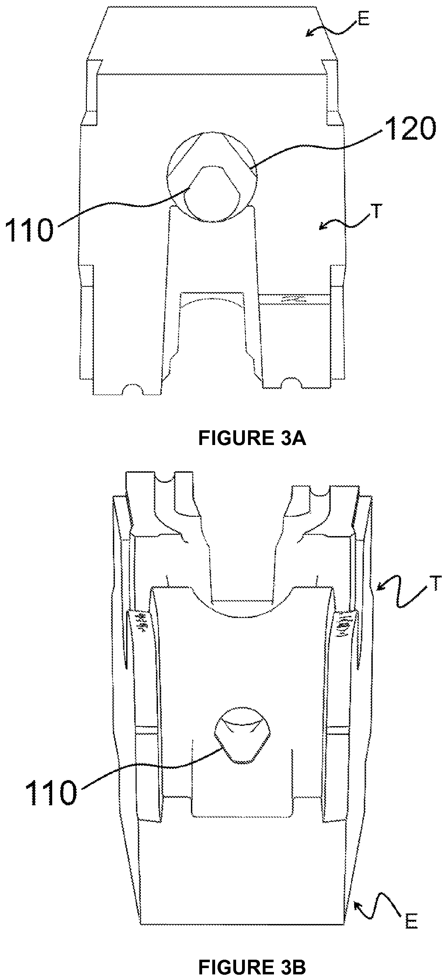

La figure 3A est une vue de dessus d'une pièce latérale 2A, 2B d'un moule 1 selon l'invention, comprenant une pipe 10A, 10B présentant une section 120 au niveau de l'ouverture supérieure 12A, 12B sur sa face supérieure T, la section 110 de la pipe 10A, 10B dans la partie inférieure étant également indiquée. La face extérieure E de chaque pièce latérale 2A, 2B est essentiellement parallèle au plan P. La figure 3B est une vue de dessous d'une pièce latérale 2A, 2B d'un moule 1 selon l'invention, comprenant une pipe 10A, 10B présentant une ouverture inférieure 11A, 11B sur sa face supérieure B.

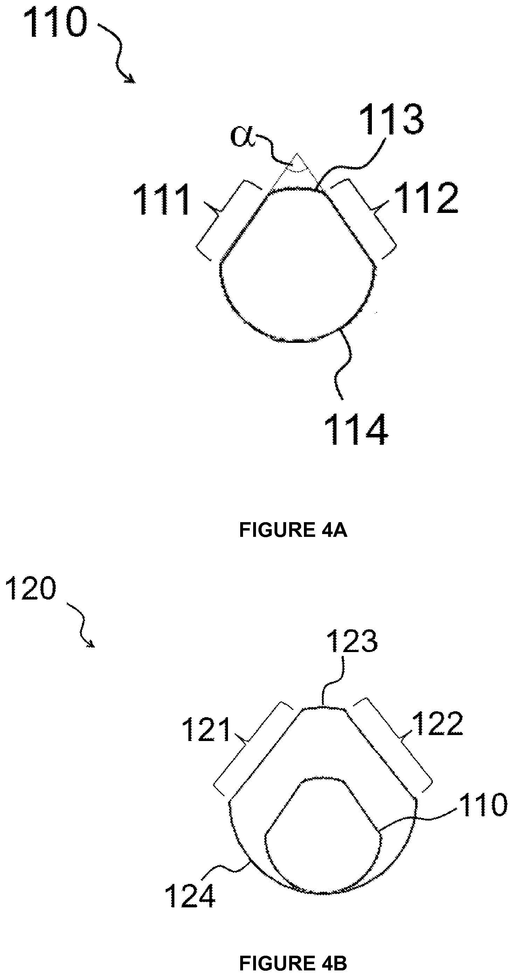

La figure 4A est une vue de détail de la section 110 au niveau de l'ouverture inférieure d'une pipe 10A, 10B. La figure 4B illustre la section 120 au niveau de l'ouverture supérieure 12, en comparaison avec la section 110 au niveau de l'ouverture inférieure 11 de la même pipe 10A, 10B. La section 110 de chaque pipe de remplissage 10A, 10B au niveau de l'ouverture inférieure 11A, 11B est inférieure à 40% à 80% de la section 120 de ladite pipe de remplissage 10A, 10B au niveau de l'ouverture supérieure 12A, 12B, par exemple inférieure à environ 60%.

En référence aux figures 3A et 3B, la section 110, 120 respective de chaque pipe 10A, 10B présente un rétrécissement, de sorte à réduire de manière progressive la largeur de la section 110, 120 dans la direction opposée au plan longitudinal moyen P. Du fait de l'inclinaison des pipes vers le plan moyen P, le métal fondu s'écoule de manière privilégiée le long de la portion rétrécie de la pipe. La géométrie du rétrécissement favorise une réduction de la surface de contact entre le métal fondu et le moule, par rapport à une section de forme circulaire, et une augmentation de la vitesse d'écoulement du métal fondu, et par conséquent une réduction des échanges thermiques entre le métal fondu et le moule 1.

Selon un mode de réalisation préféré mais non limitatif, illustré sur les figures 4A et 4B, ledit rétrécissement de chaque section 110, 120 de pipe 10A, 10B comprend deux portions essentiellement linéaires 111, 112, 121, 122 formant deux surfaces essentiellement planes dans la région de rétrécissement de chaque pipe 10A, 10B.

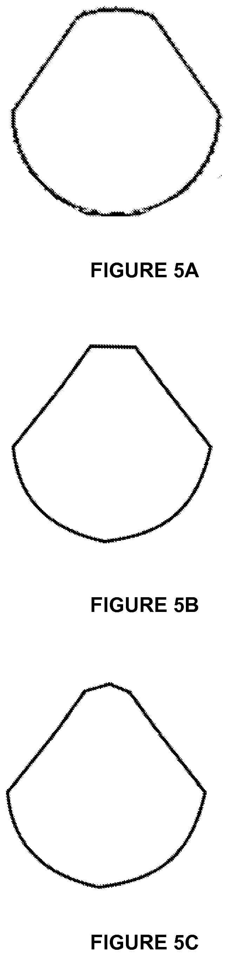

De manière avantageuse, les deux surfaces planes de chaque pipe 10A, 10B forment un angle α compris entre 40 et 90°, par exemple d'environ 77°. L'angle α peut être constant sur toute la longueur de chaque pipe, ou présenter une variation sur la longueur de chaque pipe. De préférence, ledit angle α est orienté essentiellement dans la direction opposée au plan longitudinal commun des rails 30. Dans chaque pipe 10A, 10B, les surfaces planes peuvent être symétriques ou asymétriques par rapport à la bissectrice de l'angle α. En référence à la figure 5A, les surfaces planes peuvent être liées par une portion courbée. De manière alternative et en référence aux figures 5B et 5C, les surfaces planes peuvent être liées par une section droite, ou plusieurs portions droites formant des angles obtus entre elles.

La section 110, 120 de chaque pipe 10A, 10B peut présenter en outre une portion concave 114, 124 orientée essentiellement en direction du plan longitudinal commun des rails 30. La portion concave 114, 124 est, comme illustré sur les figures 5A à 5C, en forme d'un arc de cercle.

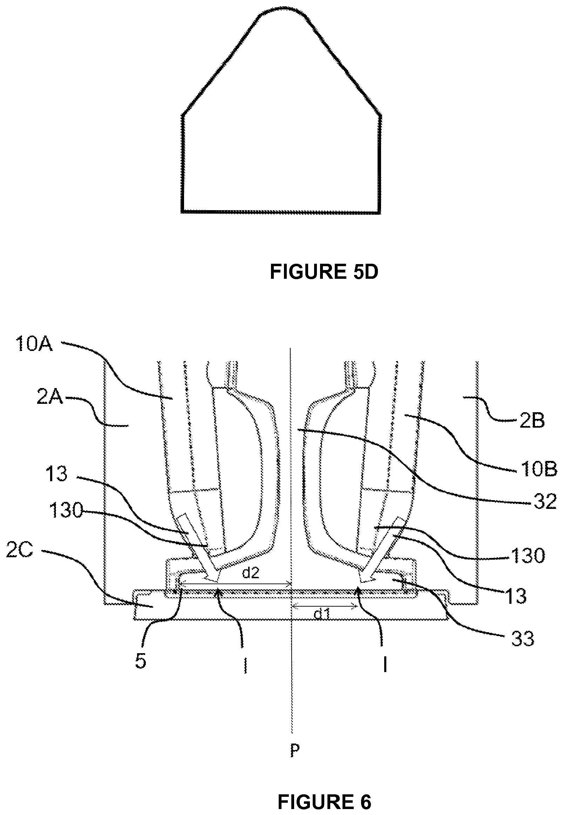

De manière alternative et en référence à la figure 5D, la section 110, 120 de chaque pipe 10A, 10B peut présenter une portion en forme de trois parois formant des angles droits, ladite portion étant orientée essentiellement en direction du plan longitudinal commun des rails 30. Cependant, toute autre forme permettant de raccorder les parois formant la partie rétrécie des pipes 10A, 10B pourrait être envisagée.

En effet, le métal ne remplit pas la totalité de la section 110, 120 des pipes 10A, 10B lors de son écoulement.

En référence à la figure 6 et comme indiqué plus haut, la portion inférieure 13 des pipes est courbée en direction du plan moyen P, afin de réorienter le jet de métal fondu vers des zones d'impact I déterminées sur le fond de l'empreinte. Le rayon de courbure peut être comprise entre 50 mm et 150 mm, par exemple, être d'environ 68 mm. Cette portion inférieure 13 des pipes 10A, 10B respectives du moule 1 est agencée de sorte à conduire le métal fondu, tangentiellement à la courbure de ladite portion inférieure, sur une zone d'impact I respective distincte. L'homme du métier saura choisir l'emplacement des zones d'impact I pour obtenir une fusion des rails 30 sur une largeur déterminée.

Par exemple, on choisit l'emplacement de l'ouverture inférieure et la courbure de la portion inférieure de chaque pipe pour obtenir une zone d'impact I situé à une distance d1 du plan longitudinal moyen P comprise entre 40% et 80% de la distance d2 entre le plan P et l'extrémité 5 du patin 33 de rail dans le sens de la largeur du rail 30.

En particulier, par rapport au moule décrit dans le brevet FR2966172, les zones d'impact du moule selon l'invention sont situées à une distance plus proche du plan P et permettent donc une fusion du rail 30 sur une plus grande largeur.

De préférence, la section 110, 120 de chaque pipe 10A, 10B de remplissage diminue du haut vers le bas du moule 1. Cette diminution de la section peut ne pas être constante le long de la pipe correspondante. Typiquement, la diminution est continue sur la portion rectiligne 16 de chaque pipe 10A, 10B, et correspond généralement à une dépouille prévue pour le démoulage d'un noyau définissant la forme intérieure de la pipe lors de la fabrication du moule. En ce qui concerne la partie courbée 13 de la pipe, elle peut présenter une variation de section non constante sur sa hauteur. En effet, comme illustré sur la figure 1, seule la partie présentant le rétrécissement de section peut être courbée, tout en conservant une forme concave, tandis que la partie opposée au rétrécissement reste rectiligne, dans le prolongement de la partie supérieure 16.

Le moule peut en outre comprendre des canaux et/ou barrettes de dégazage agencés pour évacuer une partie de l'air contenu dans le moule lors du remplissage par un métal fondu, et pour évacuer des gaz se produisant lors de la solidification du métal.

On va maintenant décrire les étapes d'une soudure aluminothermique. Après avoir monté les pièces 2A, 2B, 2C du moule 1 autour des extrémités des rails 30 à souder, on préchauffe le moule par tout moyen adapté, tel qu'un chalumeau. On place un creuset au-dessus du moule 1, on déclenche une réaction aluminothermique dans le creuset et fait couler du métal fondu dans les pipes 10A, 10B.

Le métal fondu descend dans les pipes 10A, 10B selon leurs axes d'écoulement respectifs et s'écoule sur un point d'arrivé distinct pour chaque pipe 10A, 10B respective, au fond de l'empreinte de moulage. Ledit point d'arrivée de chaque pipe 10A, 10B est typiquement situé hors du plan longitudinal P commun aux rails 30 à souder, de manière à remplir le moule 1 de manière symétrique dans un sens transversal et longitudinal. Il s'agit ainsi d'un procédé de coulée montante, c'est-à-dire que le métal pénètre dans l'empreinte au niveau du patin 33, puis remonte dans l'empreinte en direction du champignon 31.

Le métal s'écoule dans les pipes 10A, 10B avec une vitesse élevée qui est supérieure à la vitesse dans les moules connus. L'échange thermique entre le métal fondu et la surface des pipes 10A, 10B, est donc minimisé. Par conséquent, la température du métal pénétrant dans l'empreinte de moulage est élevée, ce qui permet de faire fondre les rails sur une largeur adaptée pour obtenir une bonne qualité métallurgique de la soudure.

Une fois que le métal a suffisamment durci, on peut retirer et/ou détruire les pièces 2A, 2B, 2C du moule 1, et effectuer une finition de la portion soudée pour assurer une bonne continuité des rails 30.

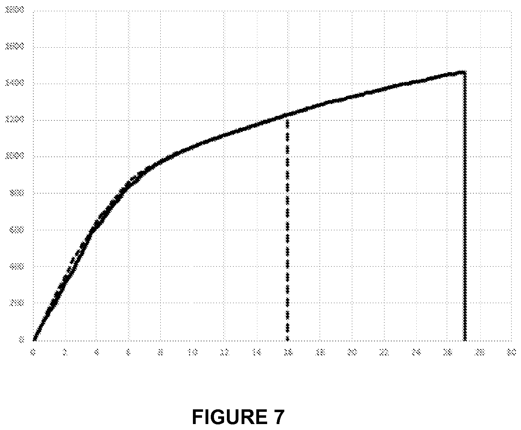

La soudure obtenue ainsi présente une qualité supérieure aux soudures obtenues par des procédés connus. La figure 7 est un graphe issu d'un essai de flexion en trois points réalisé selon la norme européenne EN14730-1:2017 sur un rail d'un profil 60 E1 en nuance R260. Un point d'appui central est situé sur le champignon du rail au niveau de la soudure. Deux points d'appui externes sont situés sous le patin des rails, espacés de 1 m. C'est donc le patin qui se retrouve en traction puisque l'on appuie sur le champignon.

L'essai de flexion permet de mesurer l'effort à rupture (en kilo Newton) en fonction du déplacement (en millimètres) jusqu'à la rupture du rail soudé. La vitesse de déplacement du vérin d'appui est constante et la vitesse de chargement ne doit pas dépasser 60kN/s.

Dans les essais de flexion sur les soudures des procédés connus (ligne pointillée), on obtient typiquement un allongement maximal d'environ 16 mm pour un effort de rupture entre 1200 et 1300 kN. Dans des essais de flexion sur des soudures obtenues en utilisant un moule 1 selon l'invention (ligne continue), on obtient un allongement supérieur à 25 mm pour une force d'environ 1500 kN. Ces résultats présentent donc une amélioration de 70% en allongement et de 15% en force par rapport aux soudures conventionnelles. L'amélioration de la qualité métallurgique est également reflétée par le fait qu'une soudure obtenue en utilisant un moule selon l'invention ne comprend typiquement pas de défauts détectables par des moyens non destructifs tels qu'une analyse par ultrason.

## Revendications

1. Moule (1) pour la soudure aluminothermique de deux rails (30), ledit moule (1) comprenant au moins deux pièces latérales (2A, 2B) en matériau réfractaire, configurées pour être montées temporairement en regard l'une de l'autre de part et d'autre des extrémités des rails (30) à souder de sorte à définir entre lesdites extrémités de rails (30) une empreinte de moulage,
chaque pièce latérale (2A, 2B) comprenant au moins une pipe de remplissage (10A, 10B) configurée pour guider du métal fondu de la partie supérieure du moule vers une zone de l'empreinte de moulage située au niveau du patin (33) d'un rail,
**caractérisé en ce que** chaque pipe de remplissage (10A, 10B) présente une section (110, 120) perpendiculaire à un axe d'écoulement du métal fondu dans la pipe (10A, 10B) respective, présentant un rétrécissement de sorte à réduire de manière progressive la largeur de ladite section (110, 120) dans une direction opposée à un plan longitudinal moyen (P) commun aux deux rails à souder.

2. Moule selon la revendication 1 dans lequel chaque pipe de remplissage (10A, 10B) présente deux parois essentiellement planes dans la région du rétrécissement.

3. Moule selon la revendication 2, dans lequel lesdites parois forment un angle (α) compris entre 40 et 90°.

4. Moule selon l'une des revendications précédentes, dans lequel la section (110, 120) de chaque pipe de remplissage (10A, 10B) présente en outre une portion concave (114, 124) en forme d'arc de cercle, orientée vers le plan longitudinal moyen (P) commun aux deux rails (30) à souder.

5. Moule selon l'une des revendications précédentes, dans lequel la section horizontale (110, 120) de chaque pipe de remplissage (10A, 10B) diminue de manière continue du haut vers le bas du moule.

6. Moule selon la revendication 5, dans lequel la section horizontale (110, 120) de chaque pipe de remplissage (10A, 10B) au niveau de l'ouverture inférieure (11A, 11B) est inférieure à 40% à 80% de la section horizontale de ladite pipe de remplissage (10A, 10B) au niveau de l'ouverture supérieure (12A, 12B).

7. Moule selon l'une des revendications précédentes, dans laquelle chaque pipe de remplissage (10A, 10B) présente, à son extrémité inférieure, une portion courbée en direction du plan longitudinal moyen (P) commun aux deux rails (30) à souder.

8. Moule selon l'une des revendications précédentes, dans lequel chaque pipe de remplissage (10A, 10B) est agencée de sorte à conduire le métal fondu sur une zone d'impact (I) distincte au niveau du patin des rails.

9. Moule selon l'une des revendications précédentes, comprenant en outre une troisième pièce (2C) apte à venir en contact avec les faces inférieures des patins (33) des rails (30) à souder et définissant un fond de l'empreinte de moulage.

10. Moule selon l'une des revendications précédentes, dans lequel chaque pipe de remplissage (10A, 10B) est inclinée en direction du plan moyen (P) du haut vers le bas du moule (1).

## Patentansprüche

1. Form (1) für die aluminothermische Schweißung von zwei Schienen (30), wobei die Form (1) mindestens zwei seitliche Teile (2A, 2B) aus feuerfestem Material umfasst, die so konfiguriert sind, dass sie vorübergehend einander gegenüber an den Enden der zu verschweißenden Schienen (30) montiert werden, um zwischen den Enden der genannten Schienen (30) eine Gussformkavität zu definieren, wobei jedes seitliche Teil (2A, 2B) mindestens ein Füllrohr (10A, 10B) umfasst, das so konfiguriert ist, dass es geschmolzenes Metall vom oberen Teil der Form zu einem Bereich der Gussformkavität auf Höhe des Schienenfußes (33) leitet, **dadurch gekennzeichnet, dass** jedes Füllrohr (10A, 10B) einen Querschnitt (110, 120) senkrecht zu einer Strömungsachse des geschmolzenen Metalls im jeweiligen Füllrohr (10A, 10B) aufweist, der eine Verengung zeigt, um die Breite des genannten Querschnitts (110, 120) progressiv in einer Richtung entgegen einer gemeinsamen mittleren Längsebene (P) der zu verschweißenden Schienen zu verringern.

2. Form nach Anspruch 1, wobei jedes Füllrohr (10A, 10B) im Bereich der Verengung zwei im Wesentlichen ebene Wände aufweist.

3. Form nach Anspruch 2, wobei die genannten Wände einen Winkel (α) zwischen 40 und 90° bilden.

4. Form nach einem der vorhergehenden Ansprüche, wobei der Querschnitt (110, 120) jedes Füllrohrs (10A, 10B) ferner einen konkaven Abschnitt (114, 124) in Form eines Kreisbogens aufweist, der zur gemeinsamen mittleren Längsebene (P) der zu verschweißenden Schienen (30) orientiert ist.

5. Form nach einem der vorhergehenden Ansprüche, wobei der horizontale Querschnitt (110, 120) jedes Füllrohrs (10A, 10B) kontinuierlich vom oberen Teil der Form zum unteren Teil der Form abnimmt.

6. Form nach Anspruch 5, wobei der horizontale Querschnitt (110, 120) jedes Füllrohrs (10A, 10B) im Bereich der unteren Öffnung (11A, 11B) kleiner ist als 40% bis 80% des horizontalen Querschnitts des genannten Füllrohrs (10A, 10B) im Bereich der oberen Öffnung (12A, 12B).

7. Form nach einem der vorhergehenden Ansprüche, wobei jedes Füllrohr (10A, 10B) an seinem unteren Ende einen gebogenen Abschnitt in Richtung der gemeinsamen mittleren Längsebene (P) der zu verschweißenden Schienen (30) aufweist.

8. Form nach einem der vorhergehenden Ansprüche, wobei jedes Füllrohr (10A, 10B) so angeordnet ist, dass es das geschmolzene Metall auf eine gesonderte Aufschlagzone (I) auf Höhe des Schienenfußes leitet.

9. Form nach einem der vorhergehenden Ansprüche, die ferner ein drittes Teil (2C) umfasst, das geeignet ist, mit den Unterseiten der Schienenfüße (33) der zu verschweißenden Schienen (30) in Kontakt zu kommen und einen Boden der Gussformkavität zu definieren.

10. Form nach einem der vorhergehenden Ansprüche, wobei jedes Füllrohr (10A, 10B) von oben nach unten der Form (1) in Richtung der mittleren Ebene (P) geneigt ist.

## Claims

1. A mould (1) for aluminothermic welding of two rails (30), said mould (1) comprising at least two side pieces (2A, 2B) made of refractory material configured to be mounted temporarily opposite each other on either side of the ends of the rails (30) to be welded so as to define a moulding cavity between said ends of rails (30),
each lateral piece (2A, 2B) comprising at least one filling pipe (10A, 10B) configured to guide molten metal of the upper part of the mould towards a zone of the moulding cavity located in the region of the foot (33) of a rail,
**characterised in that** each filling pipe (10A, 10B) exhibits a section (110, 120) perpendicular to a flow axis of the molten metal in the respective pipe (10A, 10B), having a narrowing so as to progressively reduce the width of said section (110, 120) in a direction opposite a mean longitudinal plane (P) common to the two rails to be welded.

2. The mould according to claim 1 wherein each filling pipe (10A, 10B) has two essentially flat walls in the region of the narrowing.

3. The mould according to claim 2, wherein said walls form an angle (α) between 40 and 90°.

4. The mould according to any one of the preceding claims, wherein the section (110, 120) of each filling pipe (10A, 10B) also has a concave portion (114, 124) in the form of an arc of a circle, oriented towards the mean longitudinal plane (P) common to the two rails (30) to be welded.

5. The mould according to any one of the preceding claims, wherein the horizontal cross-section (110, 120) of each filling pipe (10A, 10B) diminishes continuously from the top to the bottom of the mould.

6. The mould according to claim 5, wherein the horizontal cross-section (110, 120) of each filling pipe (10A, 10B) in the region of the lower opening (11A, 11B) is less than 40% to 80% of the horizontal cross-section of said filling pipe (10A, 10B) in the region of the upper opening (12A, 12B).

7. The mould according to any one of the preceding claims, wherein each filling pipe (10A, 10B) has at its lower end a curved portion in the direction of the mean longitudinal plane (P) common to the two rails (30) to be welded.

8. The mould according to any one of the preceding claims, wherein each filling pipe (10A, 10B) is arranged so as to convey molten metal over a separate impact zone (I) in the region of the foot of the rails.

9. The mould according to any one of the preceding claims, also comprising a third piece (2C) suitable for contact with the lower faces of the feet (33) of the rails (30) to be welded and defining a base of the moulding cavity.

10. The mould according to any one of the preceding claims, wherein each filling pipe (10A, 10B) is inclined in the direction of the mean plane (P) from the top to the bottom of the mould (1).
